(19) Europäisches Patentamt
European Patent Office
Office européen des brevets

(11) Veröffentlichungsnummer: **0 191 929**
**B1**

(12) # EUROPÄISCHE PATENTSCHRIFT

(45) Veröffentlichungstag der Patentschrift: **03.05.89**

(51) Int. Cl.⁴: **C 07 F 7/18**, C 08 K 5/54, C 08 L 21/00

(21) Anmeldenummer: **85115958.2**

(22) Anmeldetag: **13.12.85**

(54) **Haftvermittler zur Herstellung von Vulkanisaten mit gutem Füllstoff/Kautschuk-Verbund.**

(30) Priorität: **08.02.85 DE 3504241**
**14.08.85 DE 3529109**

(43) Veröffentlichungstag der Anmeldung:
**27.08.86 Patentblatt 86/35**

(45) Bekanntmachung des Hinweises auf die Patenterteilung:
**03.05.89 Patentblatt 89/18**

(84) Benannte Vertragsstaaten:
**AT BE DE FR GB IT LU NL SE**

(56) Entgegenhaltungen:
**DE-A- 2 712 866**
**FR-A- 2 295 958**

**RUBBER CHEMISTRY AND TECHNOLGY, Band 56, Nr. 1, März/April 1983, Seiten 94-104, Akron, Ohio, US; R.J. PICKWELL: "Bis(triethoxsilylethyltolylenen)-polysulfide, a scorch-resistant silane coupling agent for mineral-filled elastomers"**

(73) Patentinhaber: **HÜLS AKTIENGESELLSCHAFT, Patentabteilung / PB 15 - Postfach 13 20, D-4370 Marl 1 (DE)**

(72) Erfinder: **Zerpner, Dieter, Dr., Neulandstrasse 110, D-4370 Marl (DE)**
Erfinder: **Streck, Roland, Dr., Leverkusener Strasse 12, D-4370 Marl (DE)**
Erfinder: **Haag, Horst Günter, Dr., Wellerfeldweg 219, D-4370 Marl (DE)**

**EP 0 191 929 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Haftvermittler zur Herstellung von Vulkanisaten, welche aus in der Hitze vulkanisierbaren Massen erhalten werden und einen guten Füllstoff/Kautschuk-Verbund aufweisen.

Die Massen sind durch die folgenden Merkmale charakterisiert:

— Sie bestehen aus einem aktiven, verstärkenden Füllstoff, einer Kautschukkomponente, einer wirksamen Menge eines Vulkanisationsmittels und üblichen Zusatzstoffen.

— Der Füllstoff besteht zum Teil aus einem hochdispersen Füllstoff aus der Gruppe der Kieselsäuren, der Silikate und ihrer Gemische und gegebenenfalls weiteren aktiven, verstärkenden Füllstoffen, wie beispielsweise Gummirußen.

— Die Kautschukkomponente besteht aus einem oder mehreren, olefinisch ungesättigten Kautschuken, die zur Vulkanisation mit dem Vulkanisationsmittel befähigt sind.

— Das Vulkanisationsmittel ist ein Vulkanisationssystem, das Schwefel oder Schwefelspender in Kombination mit den üblichen Beschleunigern enthält.

Die in der Hitze vulkanisierbaren Massen werden durch ein Verfahren erhalten, das durch die folgenden Merkmale charakterisiert ist:

— In der ersten Stufe wird eine Grundmischung (Vorbatch) durch Heißmischen der Komponenten mit Ausnahme des Vulkanisationsmittels bei größer 130°C in einem Kneter (Innenmischer) hergestellt.

— In der zweiten Stufe wird das Vulkanisationsmittel bei kleiner 100°C, insbesondere bei kleiner/gleich 70°C, d.h. im allgemeinen weit unterhalb der Anspringtemperatur des Vulkanisationsmittels, beispielsweise auf einer Walze, zugemischt (Warmmischen).

Im Hinblick auf einen guten Füllstoff/Kautschuk-Verbund in den Vulkanisaten erwies es sich als notwendig, die Kieselsäuren und Silikate mit Haftvermittlern zu behandeln (beschichten). Diese sollen einerseits Gruppen aufweisen, die zur Bildung einer stabilen chemischen Bindung mit der Füllstoffoberfläche in der Lage sind (Siloxanbindung). Sie sollen andererseits Gruppen aufweisen, die bei der Vulkanisation zur Bildung einer stabilen chemischen Bindung mit der Kautschukkomponente in der Lage sind (Schwefelbrücken). Sie sollen somit die Herstellung von Vulkanisaten ermöglichen, die einen guten Füllstoff/Kautschuk-Verbund aufweisen.

Ein bekannter Haftvermittler ist Gamma-Mercaptopropyltriethoxysilan. Nachteilig ist die bei seiner Handhabung auftretende Geruchsbelästigung (Flüchtigkeit). Ein weiterer Nachteil ist die Tatsache, daß bei der Weiterverarbeitung einer vulkanisierbaren Masse, welche einen mit diesem Haftvermittler behandelten Füllstoff enthält, vorzeitige Vulkanisation (Beeinträchtigung des Fließverhaltens, scorch) auftreten kann.

Man ist daher dazu übergegangen, Haftvermittler einzusetzen, die diese Nachteile überwinden und durch die folgende Formel charakterisiert sind:

$$(C_2H_5O)_3Si\text{-}CH_2CH_2CH_2\text{-}S_x\text{-}CH_2CH_2CH_2\text{-}Si(OC_2H_5)_3$$

x ist die durch Elementaranalysen bestimmte, mittlere Zahl der S-Atome, bezogen auf zwei Si-Atome (DE-PS 2 712 866). x ist bei einem handelsüblichen Haftvermittler ungefähr 4 («Tetrasulfan»).

Der Haftvermittler wird in der Regel in der ersten Verfahrensstufe zugemischt. Er kann auch in der zweiten Verfahrensstufe und zwar vor der Zugabe des Vulkanisationsmittels zugemischt werden.

Mit den Haftvermittlern des zuletzt geschilderten Standes der Technik erhaltene, vulkanisierbare Massen zeigen in Einzelfällen eine signifikante Verminderung der Vulkanisationsgeschwindigkeit im Vergleich zu einer vulkanisierbaren Masse, welche ohne Haftvermittler erhalten ist (Blindversuch).

Die Aufgabe der Erfindung ist es, Haftvermittler bereitzustellen, mit denen dieser Nachteil überwunden werden kann. Sie sollen bei der Handhabung keinen Anlaß zur Geruchsbelästigung geben. Bei der Weiterverarbeitung der vulkanisierbaren Masse soll kein scorch auftreten. Die anwendungstechnischen Eigenschaften der Vulkanisate sollen den Anforderungen der Praxis entsprechen.

Die Aufgabe wurde in überraschender Weise wie in den Patentansprüchen angegeben gelöst.

Die Herstellung des (Beta-trichlorsilylethyl)benzylchlorids der Formel (IV) (Isomerengemisch) ist aus der DE-PS 2 602 171 bekannt. Das zu seiner Herstellung eingesetzte, handelsübliche Vinylbenzylchlorid ist in der Regel ein Gemisch aus den meta- und para-Isomeren.

Der Chloressigsäure-[5-(Beta-trichlorsilylethyl)-norborn-2(3)-yl]-ester der Formel (VIII), wobei X für Chlor steht (Isomerengemisch), ist neu. Er kann aus 5-Vinyl-norborn-2-en, welches im Handel erhältlich ist, in einem zweistufigen Verfahren hergestellt werden.

In der ersten Stufe erfolgt die selektive Anlagerung von Chloressigsäure an die endocyclische Doppelbindung unter Bildung eines Isomerengemisches (Chloressigsäure-[5-vinylnorborn-2(3)-yl]-ester). Dieses ist neu.

In der zweiten Stufe erfolgt die Anlagerung von Trichlorsilan an die Doppelbindung der Vinylgruppe unter Bildung des Esters der Formel (VIII) (vgl. DE-PS 2 602 171 wegen der analogen Anlagerung von Trichlorsilan an Vinylbenzylchlorid).

Es ergibt sich folgendes Reaktionsschema:

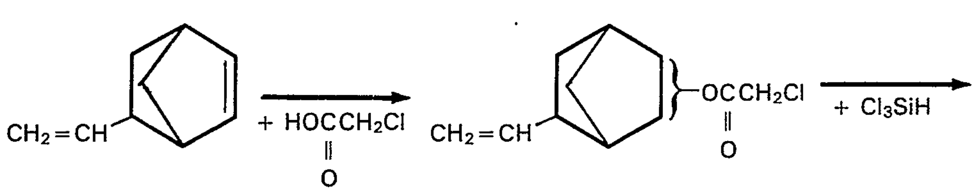


(VIII)

Das Gemisch aus Chloressigsäure-[5-(Beta-trialkoxysilylethyl)-norborn-2(3)-yl]-ester der allgemeinen Formel (VIII) mit X = RO (Hauptprodukt) und oligomeren Kondensationsprodukten ist durch Alkoholyse und zwar in Gegenwart eines aliphatischen, tertiären Amins erhältlich. Das gebildete Aminhydrochlorid und das Lösemittel werden abgetrennt (Rohprodukt).

Wegen der Struktur der angegebenen Nebenprodukte siehe W. Noll, Chemie und Technologie der Silikone, Verlag Chemie (1968), Seite 71 ff.

Das Bis-[(Beta-trialkoxysilylethyl)benzyl]-oligosulfid der allgemeinen Formel (I) und der Oligosulfandiessigsäure-bis-[5-(Beta-trialkoxysilylethyl)norborn-2(3)-yl]-ester der allgemeinen Formel (II) können durch Umsetzung von (Beta-trialkoxysilylethyl)-benzylchlorid der allgemeinen Formel

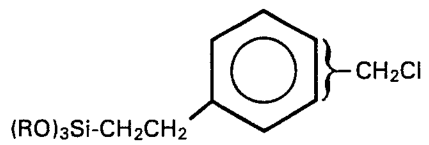

bzw. der Chloressigsäure-[5-Beta-trialkoxysilylethyl)-norborn-2(3)-yl]-ester der allgemeinen Formel (VIII) mit einem Reagens, das aus Natriummethylat und/oder -ethylat, feinteiligem Natriumhydrogensulfid und feinteiligem Schwefel in Methanol und/oder Ethanol besteht, erhalten. Die Umsetzung findet unter Luft- und Feuchtigkeitsausschluß statt. Diese Verfahrensstufe ist grundsätzlich bekannt (Analogieverfahren, DE-PS 2 712 866).

Das sich dabei bildende Natriumchlorid und das Lösungsmittel werden anschließend abgezogen.

Die Abtrennung der oligomeren Bestandteile aus den oben beschriebenen Rohprodukten des (Betatrialkoxysilylethyl)benzylchlorids und des Chloressigsäure-[5-(Beta-trialkoxysilylethyl-)norborn-2(3)-yl]-esters erfolgt durch Destillation unter vermindertem Druck.

Der Ester der allgemeinen Formel (VIII) kann auch direkt durch Anlagerung eines Trialkoxysilans an die Doppelbindung der Vinylgruppe des Chloressigsäure-[5-vinylnorborn-2(3)-yl]-esters erhalten werden.

Geeignete Kautschuke in den vulkanisierbaren Massen sind beispielsweise NBR, NR, 1,4-cis-IR, BR, SBR, EPDM, IIR (IISRP) und Polyalkenylen-Kautschuke, wie Polypentenylen-, Polyoctenylen- und Polydodecenylen-Kautschuk.

Als Zusatzstoff in den vulkanisierbaren Massen können die in der Kautschuktechnik üblichen Weichmacheröle eingesetzt werden. Bevorzugt sind aromatische, aliphatische und naphthenische Kohlenwasserstoffe. Sie können in üblichen Mengen zugesetzt werden.

Als Zusatzstoff können auch weitere übliche Hilfsmittel, wie beispielsweise Zinkoxid, Stearinsäure, Harzsäuren, Alterungsschutzmittel und Ozonschutzwachse, in üblichen Mengen zugesetzt werden.

Der aktive, verstärkende Füllstoff besteht in der Regel aus größer/gleich 10, insbesondere größer/gleich 30 Massen-% eines hochdispersen Füllstoffs aus der Gruppe der Kieselsäuren, Silikate und ihrer Gemische, der mit dem Haftvermittler in Gegenwart der Kautschukkomponente (in situ) behandelt (beschichtet) ist, und kleiner/gleich 90, insbesondere kleiner/gleich 70 Massen-% anderen aktiven, verstärkenden Füllstoffen (Haftvermittler + Kieselsäuren und/oder Silikate = Menge des in situ behandelten Füllstoffs).

Die Oberfläche des Füllstoffs vor der Behandlung ist in der Regel 30 bis 500, insbesondere 35 bis 300 $m^2/g$, bestimmt durch Stickstoffadsorption nach BET.

Die Menge des Haftvermittlers ist in der Regel 2 bis 20, insbesondere 4 bis 15 Massen-%, bezogen auf den unbehandelten Füllstoff (Kieselsäure, Silikate).

Der Haftvermittler kann in der ersten Verfahrensstufe zugemischt werden.

In der Regel wird er in der zweiten Verfahrensstufe und zwar vor der Zugabe des Vulkanisationsmittels zugemischt.

Man kann auch einen Teil der erforderlichen Menge des Haftvermittlers, beispielsweise 40 bis 80 Massen-%, in der ersten und den restlichen Teil in der zweiten Verfahrensstufe zumischen.

Die Erfindung wird durch die folgenden Herstellungsvorschriften und anwendungstechnischen Beispiele erläutert.

In den Herstellungsvorschriften bedeuten Prozent (%) Massenprozent, M die relative Molekülmasse und $\overline{M}n$ die zahlenmittlere, relative Molekülmasse. Die Molekülmassen werden dampfdruckosmometrisch bestimmt.

In den Beispielen bedeuten Teile (T.) Massenteile. Die nicht erfindungsgemäßen Vergleichsbeispiele, vulkanisierbaren Massen (Compounds) und Vulkanisate (Probekörper) werden mit großen Buchstaben bezeichnet.

*Herstellung von Chloressigsäure-[5-vinylnorborn-2(3)-yl]-ester*

In einem 3-Halskolben mit Innenthermometer, Rührer und Rückflußkühler wurden unter trockenem Stickstoff 720 g 5-Vinylnorborn-2-en (gaschromatografische Reinheit größer/gleich 98%) und 842 g Chloressigsäure unter Zusatz von 4,8 g 2,2'-Methylen-bis-(6-tert.-butyl-4-methylphenol) auf 140°C erhitzt, wobei die leicht exotherme Reaktion einsetzte. Die Temperatur des Reaktionsgemisches wurde noch zwei Stunden auf 140°C gehalten, nach dem Abkühlen die überschüssige Chloressigsäure durch Lösen in Wasser abgetrennt und die organische Phase mit wäßriger Natriumbicarbonat-Lösung und Wasser neutral gewaschen. Nach dem Trocknen über Calciumchlorid ergab die Destillation im Vakuum 928 g (72% der Theorie) einer farblosen Flüssigkeit ($n_D^{20}$: 1,4951). Die angegebene Struktur (Isomerengemisch) wurde durch NMR- und GC-Analysen bestätigt.

*Herstellung von Chloressigsäure-[5-(Beta-trimethoxysilylethyl)-norborn-(2(3)-yl]-ester*

214 g Chloressigsäure-[5-vinylnorborn-2(3)-yl]-ester wurden unter Zusatz von 400 mg Phenothiazin und einer Lösung von 200 mg Hexachlorplatinwasserstoffsäure in 10 $cm^3$ Tetrahydrofuran in einem 3-Halskolben mit Innenthermometer, Rührer, Rückflußkühler und Tropftrichter unter trockenem Stickstoff auf 80°C erwärmt und anschließend 110 $cm^3$ Trichlorsilan innerhalb von 30 Minuten zugetropft, wobei die Temperatur der exothermen Reaktion durch Kühlung auf 80°C gehalten wurde. Nach der vollständigen Zugabe des Trichlorsilans wurde das Reaktionsgemisch noch 1,5 Stunden auf 80°C gehalten. Danach wurden leichtflüchtige Anteile im Vakuum abdestilliert.

Das erhaltene Reaktionsprodukt (Chloressigsäure-[5-(Beta-trichlorsilylethyl)-norborn-2(3)-yl]-ester der Formel (VIII) wurde über einen Tropftrichter unter trockenem Stickstoff einem stark gerührten Gemisch aus 1 l Methanol und 60 $cm^3$ Triethylamin zugesetzt. Die Temperatur der Vorlage wurde dabei durch Kühlung zwischen 10 bis 15°C gehalten. Gleichzeitig wurden weitere 478 $cm^3$ Triethylamin zugetropft, so daß die Zugabe beider Flüssigkeiten gleichzeitig nach ca.30 Minuten beendet war. Das ausgefallene Salz (Aminhydrochlorid) wurde abgesaugt und mit trockenem Toluol gewaschen. Das Filtrat wurde nach Abdestillieren des Methanols am Rotationsverdampfer mit 400 $cm^3$ trockenem Toluol versetzt, das ausgefallene Salz abgesaugt, mit Toluol gewaschen und das Filtrat vom Toluol befreit. Es wurden 299 g (89% der Theorie) eines Rohproduktes ($n_D^{20}$: 1,4720; M: 360) erhalten, das nach Destillation im Vakuum 265 g (79% der Theorie) einer farblosen Flüssigkeit ($n_D^{20}$: 1,4700; M: 350) ergab. Die angegebene Struktur (Isomerengemisch) wurde durch NMR- und GC-Analysen bestätigt.

*Herstellung von Chloressigsäure-[Beta-(triethoxysilylethyl)-norborn-2(3)-yl]-ester*

Die vorstehende Vorschrift wurde in der Weise abgeändert, daß das Methanol durch Ethanol ersetzt wurde. Es wurden 306 g (81% der Theorie) eines Rohproduktes ($n_D^{20}$: 1,4649; M: 420) erhalten, das nach Destillation im Vakuum 254 g (67% der Theorie) einer farblosen Flüssigkeit ($n_D^{20}$: 1,4628; M: 390) ergab.

*Herstellung der Haftvermittler der Erfindung*

*Herstellung von Bis-[(Beta-trimethoxysilylethyl)-benzyl]-oligosulfid, Haftvermittler 1*

In einen Rührreaktor wurden unter einer Schutzatmosphäre von trockenem Stickstoff 200 $cm^3$ trokkenes Methanol und dann 4,8 g Natrium gegeben. Zur erhaltenen Natriummethylatlösung wurde ein Gemisch aus 17,7 g feinteiligem Natriumhydrogensulfid und 20 g feinteiligem Schwefel gegeben. Zur so erhaltenen, orangeroten Reagenslösung wurden langsam und unter Kühlung 110 g (Beta-trimethoxysilylethyl)benzylchlorid [$n_D^{20}$: 1,4976; M: 290; erhalten durch Destillation unter vermindertem Druck aus dem durch Umsetzung von (Beta-trichlorsilylethyl)benzylchlorid der Formel (IV) (Gemisch aus meta- und para-Isomeren) mit Methanol erhaltenen Gemisch aus Hauptprodukt und oligomeren Nebenprodukten] gegeben (Reaktionstemperatur: 50 bis 60°C). Das Reaktionsgemisch wurde noch zwei Stunden unter Rückfluß erhitzt. Das ausgefallene Natriumchlorid wurde abgetrennt und mit Methanol gewaschen. Die vereinigten Filtrate wurden im Rotationsverdampfer unter vermindertem Druck von Methanol befreit. Ausbeute: 114 g eines orangeroten, flüssigen Reaktionsproduktes ($n_D^{20}$: 1,5708; $\overline{M}n$: 600; 19,1% S; 10,1% Si; im Mittel 3,3 S-Atome/2 Si-Atome). Die oben angegebene Struktur wurde durch IR- und NMR-Analysen bestätigt.

*Herstellung von Bis-[(Beta-triethoxysilylethyl)benzyl]-oligosulfid, Haftvermittler 2*

Die Vorschrift zur Herstellung des Haftvermittlers 1 wurde in der Weise abgewandelt, daß statt Methanol Ethanol und statt der 110 g (Beta-trimethoxysilylethyl)benzylchlorid 127 g (Beta-triethoxysilylethyl)-benzylchlorid ($n_D^{20}$: 1,4843; M: 310; erhalten durch Destillation unter vermindertem Druck aus dem durch Umsetzung von Beta-trichlorsilylethyl)benzylchlorid der Formel (IV) mit Ethanol erhaltenen Gemisch) eingesetzt wurden. Ausbeute: 125 g eines orangeroten, flüssigen Reaktionsproduktes ($n_D^{20}$: 1,5436; $\overline{M}n$: 720; 17,3% S; 8,08% Si; im Mittel 3,75 S-Atome/2 Si-Atome). Die angegebene Struktur wurde durch IR- und NMR-Analysen bestätigt.

*Herstellung eines Gemisches aus Bis-[(Beta-trimethoxysilylethyl)benzyl]-oligosulfit und strukturverwandten, oligomeren Siloxanen, Haftvermittler 3*

Die Vorschrift zur Herstellung des Haftvermittlers 1 wurde in der Weise abgewandelt, daß statt (Beta-trimethoxysilylethyl)benzylchlorid die gleiche Menge des durch Umsetzung von (Beta-trichlorsilylethyl)benzylchlorid der Formel (IV) mit Methanol erhaltenen Gemisches aus (Beta-trimethoxysilylethyl)-benzylchlorid und oligomeren Siloxanen ($n_D^{20}$: 1,5040; $\overline{M}n$: 310) eingesetzt wurde. Ausbeute: 110 g eines orangeroten, flüssigen Reaktionsproduktes ($n_D^{20}$: 1,5741; $\overline{M}n$: 830; 20,4% S; 9,31% Si; im Mittel 3,84 S-Atome/2 Si-Atome).

*Herstellung von Oligosulfandiessigsäure-bis-[5-(Beta-trimethoxysilylethyl)-norborn-2(3)-yl]-ester, Haftvermittler 4*

In einen Rührreaktor wurden unter einer Schutzatmosphäre von trockenem Stickstoff 200 $cm^3$ trokkenes Methanol und dann 4,8 g Natrium gegeben. Zur erhaltenen Natriummethylatlösung wurde ein Gemisch aus 11,7 g feinteiligem Natriumhydrogensulfid und 20 g feinteiligem Schwefel gegeben. Zur so erhaltene, orangeroten Reagenslösung wurden langsam und unter Kühlung 135 g Chloressigsäure-[5-(Beta-trimethoxysilylethyl)-norborn-2(3)-yl]-ester gegeben (Reaktionstemperatur 50 bis 60°C). Das Reaktionsgemisch wurde noch 2 Stunden unter Rückfluß erhitzt. Das ausgefallene Natriumchlorid wurde abgetrennt und mit Methanol gewaschen. Die vereinigten Filtrate wurden im Rotationsverdampfer unter vermindertem Druck vom Methanol befreit. Ausbeute: 136 g eines orangefarbenen, flüssigen Reaktionsproduktes ($n_D^{20}$: 1,5098; $\overline{M}n$: 700; 13,9% S; 7,9% Si; im Mittel 3,1 S-Atome/2 Si-Atome). Die angegebene Struktur wurde durch IR- und NMR-Analysen bestätigt.

*Herstellung von Oligosulfandiessigsäure-bis-[5-(Beta-triethoxysilylethyl)-norborn-2(3)-yl]-ester, Haftvermittler 5*

Die Vorschrift zur Herstellung des Haftvermittlers 4 wurde in der Weise abgewandelt, daß statt Methanol Ethanol und statt der 135 g Chloressigsäure--[5-(Beta-trimethoxysilylethyl)-norborn-2(3)-yl]--ester 151 g Chloressigsäure-[5-(Beta-triethoxysilyl--ethyl)-norborn-2(3)-yl]-ester eingesetzt wurden. Ausbeute: 147 g eines orangefarbenen, flüssigen Reaktionsproduktes ($n_D^{20}$: 1,5000; $\overline{M}n$: 790; 12,9% S; 7,35% Si; im Mittel 3,1 S-Atome/2 Si-Atome). Die angegebene Struktur wurde durch IR- und NMR-Analysen bestätigt.

*Herstellung eines Gemisches aus Oligosulfandiessigsäure-bis-[5-(Beta-trimethoxysilylethyl)-norborn--2(3)-yl]-ester und strukturverwandten oligomeren Siloxanen, Haftvermittler 6*

Die Vorschrift zur Herstellung des Haftvermittlers 4 wurde in der Weise abgewandelt, daß statt Chloressigsäure-[5-(Beta-trimethoxysilylethyl)-norborn--2(3)-yl]-ester die gleiche Menge des Rohproduktes (Gemisch aus Chloressigsäure-[5-(Beta-trimethoxysilylethyl)-norborn-2(3)-yl]-ester und oligomeren Siloxanen eingesetzt wurde. Ausbeute: 132 g eines orangefarbenen, flüssigen Reaktionsproduktes ($n_D^{20}$: 1,5103; $\overline{M}n$: 790; 14,1% S; 9,5% Si; im Mittel 2,6 S-Atome/2 Si-Atome).

*Herstellung der Compounds*

In einem Innenmischer wurden zunächst die Grundmischungen gemäß den folgenden Rezepturen hergestellt. Dabei stieg die Temperatur jeweils bis ca. 140°C (erste Verfahrensstufe). Auf der Walze wurde dann bei ca. 50°C das Vulkanisationsmittel oder Zunächst der Haftvermittler und dann das Vulkanisationsmittel zugemischt (zweite Verfahrensstufe).

*Beispiel 1 (Compound 1)*

Rezeptur der Grundmischung (1. Verfahrensstufe):

| | |
|---|---|
| NBR [Massenverhältnis der zugrundeliegenden Monomeren Acrylnitril/1,3-Butadien: 28/72; Warmpolymerisat; Mooney-Viskosität ($ML_{1+4}$, 100°C, DIN 53 523): 65] | 100 T. |
| Stearinsäure | 2 T. |
| Zinkoxid | 7 T. |
| hochdisperse, gefällte Kieselsäure (Oberfläche: 170 $m^2$/g, bestimmt durch Stickstoffadsorption nach BET) | 60 T. |
| Haftvermittler 1 | 2 T. |
| handelsübliches Dispergiermittel | 5 T. |
| Cumaronharz | 6 T. |
| Dioctylphthalat | 12 T. |

Vulkanisationsmittel (2. Verfahrensstufe):

| | |
|---|---|
| Dibenzothiazyldisulfid | 1 T. |
| Diphenylguanidin | 1 T. |
| Tetramethylthiurammonosulfid | 0,8 T. |
| Schwefel | 2,5 T. |

*Beispiel 2 (Compound 2)*

Das Beispiel 1 wurde in der Weise abgewandelt, daß der Haftvermittler 1 nicht in der ersten sondern in der zweiten Verfahrensstufe und zwar vor dem Vulkanisationsmittel zugemischt wurde.

*Beispiel 3 (Compound 3)*

Das Beispiel 1 wurde in der Weise abgewandelt, daß anstelle des Haftvermittlers 1 der Haftvermittler 4 eingesetzt wurde.

*Beispiel 4 (Compound 4)*

Das Beispiel 2 wurde in der Weise abgewandelt, daß anstelle des Haftvermittlers 1 der Haftvermittler 4 eingesetzt wurde.

*Beispiel A (Compound A)*

Das Beispiel 1 wurde in der Weise abgewandelt, daß anstelle des Haftvermittlers 1 der Haftvermittler des Standes der Technik (Tetrasulfan) eingesetzt wurde.

*Beispiel B (Compound B)*

Das Beispiel 2 wurde in der Weise abgewandelt, daß anstelle des Haftvermittlers 1 das Tetrasulfan eingesetzt wurde.

*Beispiel C (Compound C, Blindversuch)*

Das Beispiel 1 wurde in der Weise abgewandelt, daß der Haftvermittler 1 weggelassen wurde.

*Prüfung der Vulkanisationsgeschwindigkeit der Compounds*

Die Vulkanisationsgeschwindigkeit der Compounds wurde mit einem Zwick-Schwingelastometer bei 160°C und einer Verformungsamplitude von 1° und 3 Schwingungen pro Minute bestimmt.

TABELLE 1

Vulkanisationsgeschwindigkeit der Compounds

| Compound (Verfahrensstufe, in welcher der Haftvermittler zugemischt wurde) | Zeit (min) bis zum Umsatz bei der Vulkanisation von 10% ($t_{10}$) *) | 90% ($t_{90}$) *) |
|---|---|---|
| 1 (1.) Haftvermittler 1 | 2,1 | 6,1 |
| 2 (2.) Haftvermittler 1 | 2,1 | 4,5 |
| 3 (1.) Haftvermittler 4 | 1,5 | 5,6 |
| 4 (2.) Haftvermittler 4 | 1,4 | 6,3 |
| A (1.) Tetrasulfan | 2,0/2,2 | 11,3/9,5 |
| B (2.) Tetrasulfan | 2,4/2,1 | 10,9/9,6 |
| C — Blindversuch | 2,3/2,4 | 3,3/3,5 |

*) Die Kontrollwerte wurden mit Compounds erhalten, die unter Bedingungen hergestellt worden waren, die mit denen der den Erstmessungen zugrundeliegenden Compounds identisch waren.

Die Compounds 1 bis 4 mit den Haftvermittlern 1 und 4 der Erfindung weisen eine deutlich höhere Vulkanisationsgeschwindigkeit auf als die Compounds A und B mit dem Haftvermittler des Standes der Technik (Tetrasulfan).

Zu ähnlichen Ergebnissen gelangt man, wenn man bei der Herstellung der Compounds anstelle des Haftvermittlers 1 den Haftvermittler 2, 3, 5 oder 6 einsetzt.

*Herstellung und Prüfungen der vulkanisierten Probekörper*

Aus den Compounds 1 bis 4 und A bis C wurden in einer Presse bei 160°C die Probekörper 1 bis 4 und A bis C erhalten [Zeit (min/) 9, 7, 6, 9, 14/12, 14/13 bzw. 6/6].

Sie wurden wie in Tabelle 2 angegeben charakterisiert (Dicke der entsprechend den Normen geschnittenen Prüfkörper: 4 mm).

TABELLE 2

Anwendungstechnische Eigenschaften der vulkanisierten Probekörper

| Probekörper | 1 | 2 | 3 | 4 | A / **) | B / **) | C / **) |
|---|---|---|---|---|---|---|---|
| Zugfestigkeit (DIN 53 504), (MPa) | 9,6 | 9,9 | 12,4 | 13,4 | 10,0/10,4 | 9,6/10,9 | 8,0/10,0 |
| Reißdehnung (DIN 53 504), (%) | 213 | 203 | 204 | 221 | 210/217 | 190/231 | 326/332 |
| Spannungswert bei 200% Dehnung (DIN 53 504), (MPa) | 8,9 | 9,8 | 11,6 | 11,9 | 9,4/9,3 | 9,1 | 5,0/5,7 |
| bleibende Dehnung (interne Methode, Messung nach 1 min), (%) | 3 | 3 | 4 | 4 | 3/2 | 3/3 | 4/4 |
| Weiterreißwiderstand nach Pohle (interne Methode), (N/mm) | 16 | 16 | 23 | 26 | 14/21 | 14/16 | 16/20 |
| Shore-Härte A (DIN 53 505) | 70 | 70 | 66 | 66 | 70/66 | 70/67 | 65/64 |
| Rückprallelastizität (ISO IR 1767), (%) | 37 | 38 | 44 | 43 | 40/46 | 40/46 | 38/46 |
| Abrieb (DIN 53 516), ($mm^3$) | 132 | 127 | 133 | 124 | 137/160 | 130/154 | 188/200 |
| Druckverformungsrest (DIN 53 517, Methode B), (%) *) | 11 | 15 | 12 | 11 | 13/14 | 13/12 | 17/26 |

*) Nach einer Lagerung von 22 Stunden bei 70°C im zusammengedrückten Zustand.

**) Die Kontrollwerte wurden mit vulkanisierten Probekörpern erhalten, die unter Bedingungen hergestellt worden waren, die mit denen der den Erstmessungen zugrundeliegenden Probekörper identisch waren.

Die Probekörper 1 bis 4 mit dem Haftvermittler 1 bzw. 4 weisen Prüfwerte auf, die praktisch denen der Probekörper A und B mit dem Haftvermittler des Standes der Technik (Tetrasulfan) entsprechen oder sogar günstiger als diese sind.

Zu ähnlichen Ergebnissen gelangt man, wenn man bei der Herstellung der den Probekörpern 1 bis 4 zugrundeliegenden Compounds 1 bis 4 anstelle des Haftvermittlers 1 bzw. 4 den Haftvermittler 2, 3, 5 oder 6 einsetzt.

**Patentansprüche**

1. Haftvermittler der allgemeinen Formeln

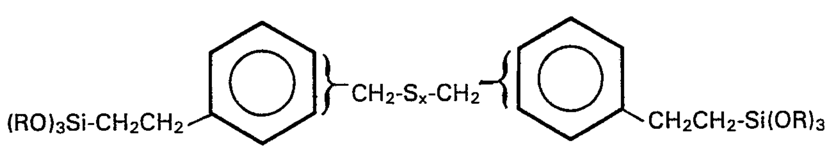

(I)

und

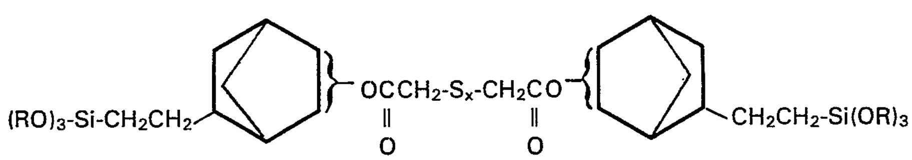

(II),

in denen R Für einen Methyl- oder Ethylrest steht und x im Mittel eine Zahl von 2 bis 6 ist.

2. Haftvermittler der allgemeinen Formel (I), erhältlich dadurch, daß man zunächst ein Vinylbenzylchlorid der Formel

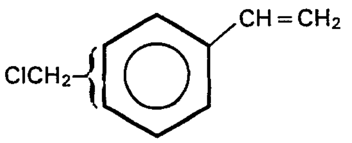
(III)

mit Trichlorsilan zu einer Verbindung der Formel

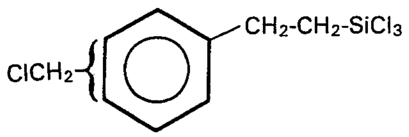
(IV)

zur Reaktion bringt, die dann nach vorheriger Substitution des Chlors der $SiCl_3$-Gruppe durch die Methoxy- oder Ethoxygruppe mit einem Natriumpolysulfid der Formel $Na_2S_x$ (V), in der x im Mittel eine Zahl von 2 bis 6 ist, umgesetzt wird.

3. Haftvermittler der allgemeinen Formel (II), erhältlich dadurch, daß man zunächst 5-Vinylnorbornen-(2) mit Chloressigsäure zur Reaktion bringt und an das entstandene Isomerengemisch der Formel

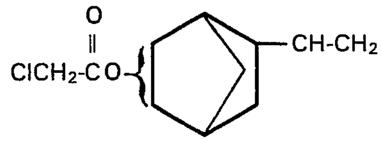
(VI)

ein Silan der Formel $HSiX_3$ (VII), in der X Chlor, Methoxy oder Ethoxy ist, anlagert und das Anlagerungsprodukt der Formel

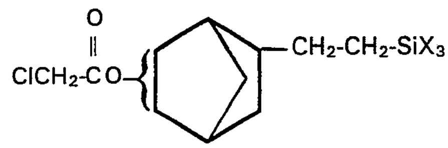
(VIII)

im Fall von X gleich Methoxy oder Ethoxy direkt und im Fall von X gleich Chlor nach vorheriger Substitution des Chlors durch die Methoxy- oder Ethoxygrupe in Gegenwart eines tertiären Amins mit einem Natriumpolysulfid der Formel $Na_2S_x$ (V), in der x im Mittel eine Zahl von 2 bis 6 ist, umgesetzt wird.

4. Haftvermittler nach den Ansprüchen 1 bis 3, dadurch gekennzeichnet, daß x im Mittel eine Zahl von 2,5 bis 5 ist.

## Claims

1. An adhesion promotor of the general formula

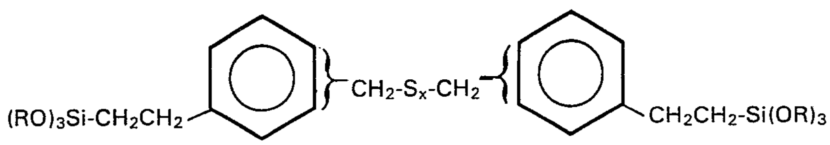
(I)

or

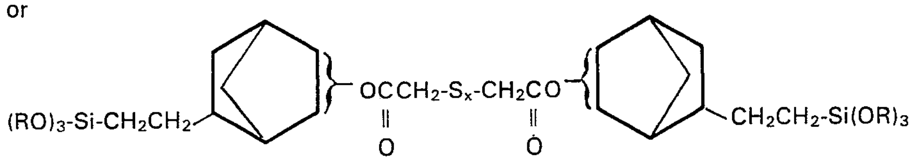
(II),

in which R represents a methyl or ethyl radical and x is on average a number from 2 to 6.

2. Ad adhesion promotor of the general formula (I), obtainable by firstly reacting a vinylbenzyl chloride of the formula

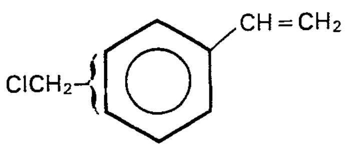
(III)

with trichlorosilane to form a compound of the formula

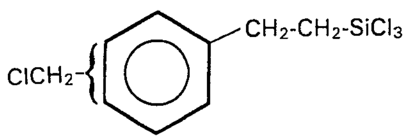
(IV)

which is then, after prior substitution of the chlorine of the $SiCl_3$ group by the methoxy or ethoxy group, reacted with a sodium polysulphide of the formula $Na_2S_x$ (V) in which x is on average a number from 2 to 6.

3. An adhesion promotor of the general formula (II), obtainable by firstly reacting 5-vinyl-2-norbornene with chloroacetic acid, and subjecting the resultant isomer mixture of the formula

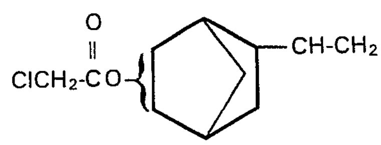
(VI)

to an addition reaction with a silane of the formula $HSiX_3$ (VII) in which X is chlorine, methoxy or ethoxy, and reacting the addition product of the formula

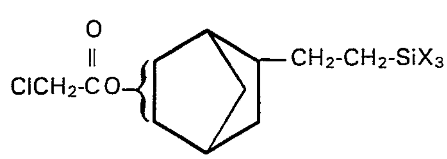
(VIII)

directly in the case where X is methoxy or ethoxy and after prior substitution of the chlorine by the methoxy or ethoxy group in the case where X is chlorine, with a sodium polysulphide of the formula $Na_2S_x$ (V) in which x is on average a number from 2 to 6, in the presence of a tertiary amine.

4. An adhesion promotor according to any of claims 1 to 3, characterized in that x is on average a number from 2.5 to 5.

## Revendications

1. Agents d'adhérence des formules générales

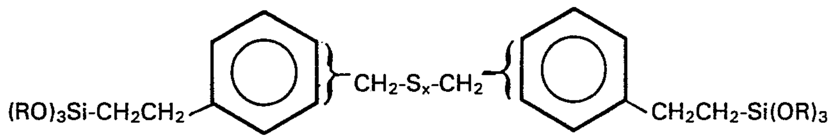

(I)

et

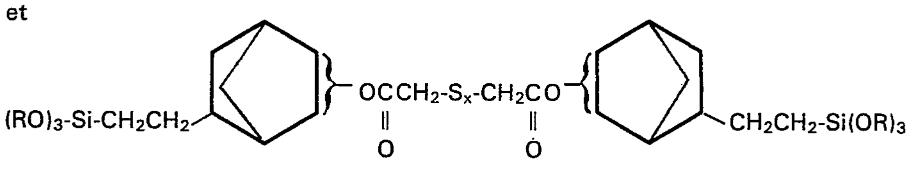

(II),

dans lesquelles R représente unradical méthyle ou éthyle et x est un nombre d'une valeur moyenne de 2 à 6.

2. Agents d'adhérence de la formule générale (I), pouvant être obtenus par le fait que l'on fait d'abord réagir un chlorure de vinylbenzyle de formule

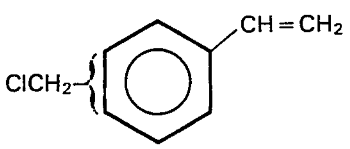

(III)

sur du trichlorosilane pour obtenir un composé de la formule

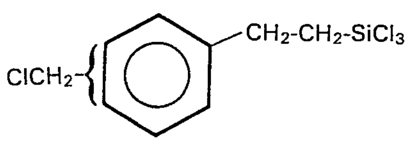

(IV)

qui, après substitution préalable du chlore du groupe $SiCl_3$ par le groupe méthoxy ou éthoxy, est amené à réagir sur un polysulfura de sodium de formule $Na_2S_x$ (V), dans laquelle x est un nombre d'une valeur moyenne de 2 à 6.

3. Agents d'adhérence de la formula générale (II), pouvant être obtenus en faisant réagir d'abord du 5-vinyl-norbornène-(2) sur de l'acide chloracétique, puis en additionnant le mélange d'isomères qui s'est formé, de formule

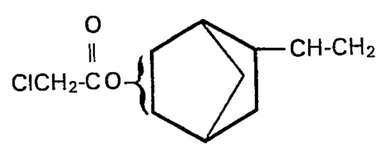

(VI)

sur un silane de formule $HSiX_3$ (VII), dans laquelle X représente du chlore, un groupe méthoxy ou éthoxy, puis en faisant réagir le produit d'addition de formule

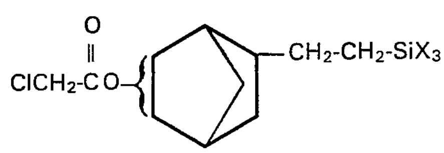

(VIII)

en présence d'une amine tertiaire sur un polysulfure de la formule $Na_2S_x$ (V), dans laquelle x est un nombre d'une valeur moyenne de 2 à 6, soit directement dans le cas où X représente un groupe méthoxy ou éthoxy, soit après substitution préalable du chlore par un groupe méthoxy ou éthoxy dans le cas où X représente du chlore.

4. Agents d'adhérence selon les revendications 1 à 3, caractérisés par le fait que x est un nombre ayant une valeur moyenne de 2,5 à 5.